# EUROPÄISCHE PATENTSCHRIFT

(11) **EP 1 311 105 B1**
(45) Veröffentlichungstag und Bekanntmachung des Hinweises auf die Patenterteilung: **28.07.2004**
(21) Anmeldenummer: 01440381.0
(22) Anmeldetag: 13.11.2001
(51) Int. Cl.: H04M 15/00, H04Q 3/00

(54) **Verfahren zur Unterstützung der Vergebührung von Diensten**
Method to support the billing of services
Méthode pour supporter la facturation de services

(43) Veröffentlichungstag der Anmeldung: 14.05.2003
(73) Patentinhaber: ALCATEL, 75008 Paris (FR)
(72) Erfinder: Lopez Aladros, Rodolfo, 70329 Stuttgart (DE); Banet, Franz-Josef, 71665 Vaihingen (DE); Duspiva, Matthias, 71229 Leonberg (DE); Lautenschlager, Wolfgang, 71287 Weissach-Flacht (DE)
(74) Vertreter: Rausch, Gabriele, Dr.

(56) Entgegenhaltungen:
- EP-A- 0 957 644
- WO-A-00/24161
- US-A- 5 982 865

## Beschreibung

Die Erfindung betrifft ein Verfahren zur Unterstützung der Vergebührung von Diensten in einem Kommunikationsnetz, bei dem Vergebührungsdaten, die die Vergebührung eines von einem Teilnehmer des Kommunikationsnetzes in Anspruch genommenen Dienstes betreffen, von einem Netzknoten oder einem Dienst-Server des Kommunikationsnetzes generiert werden. Die Erfindung betrifft weiter einen Server zur Durchführung des Verfahrens.

Ein solches Verfahren zur Unterstützung der Vergebührung von Diensten ist in der Europäischen Patentanmeldung EP 0 957 644 beschrieben. Dort wird ein Vergebührungssystem für ein Telekommunikationsnetzwerk beschrieben, dass Agenten verwendet um Nachrichten zu beobachten, die eine einzelne Dienstbenutzungen anzeigen. Es wird ein Call Record extrahiert, der in einer lokalen Datenbank vorgehalten wird. Die Information in der lokalen Datenbank wird unter Verwendung eines mobilen Agenten in einer zentralen Datenbank zusammengefasst. Die Inhalte der zentralen Datenbank können dann von berichterstattenden Agenten extrahiert werden.

Die Vergebührungsdaten für die Inanspruchnahme von Diensten durch einen Teilnehmer des Fernsprechnetzes werden von der diesem Teilnehmer zugeordneten Teilnehmervermittlungsstelle generiert und in dieser Teilnehmervermittlungsstelle abgespeichert. Die Vergebührungsdaten werden hierbei von der Teilnehmervermittlungsstelle aus den werden hierbei von der Teilnehmervermittlungsstelle aus den Verbindungsdaten des jeweiligen Teilnehmers generiert. Damit betreffen die in der Teilnehmervermittlungsstelle vorliegenden Vergebührungsdaten lediglich den Dienst "Bereitstellen einer Kommunikationsverbindung". Zur Erstellung einer Gebührenabrechnung fordert ein Gebühren-Server von den Teilnehmervermittlungsstellen die von diesen gespeicherten Vergebührungsdaten an. Diese Vergebührungsdaten betreffen jedoch, wie oben dargestellt, lediglich die Vergebührung des Verbindungs-Dienstes. Um somit eine komplette Gebührenabrechnung erstellen zu können, fordert der Vergebührungs-Server noch von weiteren Servern des Fernsprechnetzes Vergebührungsdaten an. So fordert er beispielsweise von dem Dienst-Server, der den "Short-Message-Service" bereitstellt, Vergebührungsdaten betreffend die Nutzung dieses Dienstes an. Aus den so gesammelten Vergebührungsdaten berechnet der Vergebührungs-Server sodann die Gebührenabrechnung für die Teilnehmer des Fernsprechnetzes.

Es ist die Aufgabe der Erfindung, eine kostengünstige und effektive Bereitstellung und Verarbeitung von Vergebührungsdaten innerhalb eines Kommunikationsnetzes zu gewährleisten.

Diese Aufgabe wird gelöst durch ein Verfahren zur Unterstützung der Vergebührung von Diensten in einem Kommunikationsnetz nach der Lehre von Anspruch 1. Diese Aufgabe wird weiter gelöst durch einen Server und ein Computerprogramm zur Unterstützung der Vergebührung von Diensten in einem Kommunikationsnetz nach der Lehre von Anspruch 4 bzw. Anspruch 11. Diese Aufgabe wird weiter gelöst durch ein Speichermedium nach der Lehre von Anspruch 12.

Der Erfindung liegt hierbei der Gedanke zugrunde in dem Kommunikationsnetz einen für mehrere Netzelemente und/oder Dienstserver zentralen Speicherdienst einzuführen, der von den Netzelementen und/oder den Dienstservern zur Speicherung der generierten Vergebührungsdaten kontaktiert wird und so die Vergebührungsdaten für die Nutzung von zwei oder mehr verschiedenartigen Dienste zentral speichert.

Vergebührungsdaten in diesem Sinne sind zum einen Gebührenrohdaten, (teil)verarbeitete Gebührenrohdaten und Entgelddaten. Gebührenrohdaten sind Daten, beispielsweise die Art des genutzten Dienstes, Zeitdauer der Nutzung oder Zeitpunkt der Nutzung, aus den die Gebührenschuld des Teilnehmers berechnet wird. Entgelddaten geben die konkrete Gebührenschuld in einer bestimmten Währung an.

Die Erfindung hat den Vorteil, dass durch sie die Führung eines Echtzeit-Gebührenkontos ermöglicht wird, das eine Vielzahl von Diensten umfasst. Dadurch wird eine zeitlich aktuelle Gebührenabrechnung möglich. Eine solche Gebührenabrechnung (immediate billing) wird vor allem in dem Bereich der Vergebührung von "Prepaid-Teilnehmern" benötigt. Ein weiterer Vorteil ergibt sich dadurch, dass die Vergebührung von neuen Diensten mittels der Erfindung in einfacher und kostengünstiger Art und Weise in ein bestehendes System integriert werden kann.

Weitere Vorteile ergeben sich bei dem Leistungsmerkmal "International Roaming". Das bisher sehr große Zeitfenster, in dem das Gebührenkonto eines Teilnehmers nicht mit dem tatsächlichen Zustand übereinstimmt, wird vermieden.

Weitere Vorteile ergeben sich dadurch, dass die Schnittstelle zwischen Netzelementen, Dienst-Servern und Vergebührungs-Servern vereinfacht wird. Dies ermöglicht die schnelle, einfache und kostengünstige Einführung neuer Vergebührungsdienste und Abrechnungsarten.

Ein weiterer Vorteil der Erfindung besteht darin, dass sich der Aufbau und die Funktionsweise der Netzelemente, Dienst-Server und Vergebührungs-Server durch die Einführung dieses zentralen Speicher-Dienstes vereinfacht. Einerseits werden Netzelemente und Dienst-Server von Funktionen wie Bereitstellung der Datensicherheit, Backup-Lösungen,... für die Speicherung von Vergebührungsdaten befreit. Andererseits benötigen Vergebührungs-Server keine Funktionen mehr, die das Sammeln von Vergebührungsdaten einer Vielzahl von Netzelementen und Dienst-Servern erbringen, die unterschiedliche Kommunikations-Protokolle und Datenformate verwenden. Dadurch wird der Entwicklungsaufwand in großem Maße reduziert.

Vorteilhafte Ausgestaltungen der Erfindung sind den Unteransprüchen zu entnehmen.

Im weiteren wird die Erfindung anhand mehrerer Ausführungsbeispiele unter Zuhilfenahme beiliegender Zeichnungen beispielhaft erläutert.
Fig. 1 zeigt ein Blockschaltbild eines Kommunikationsnetzes mit einem erfindungsgemäßen Server.
Fig. 2 zeigt eine funktionelle Darstellung des erfindungsgemäßen Servers nach Fig. 1 sowie eines Netzelements und eines Vergebührungs-Servers des Kommunikationsnetzes nach Fig. 1.

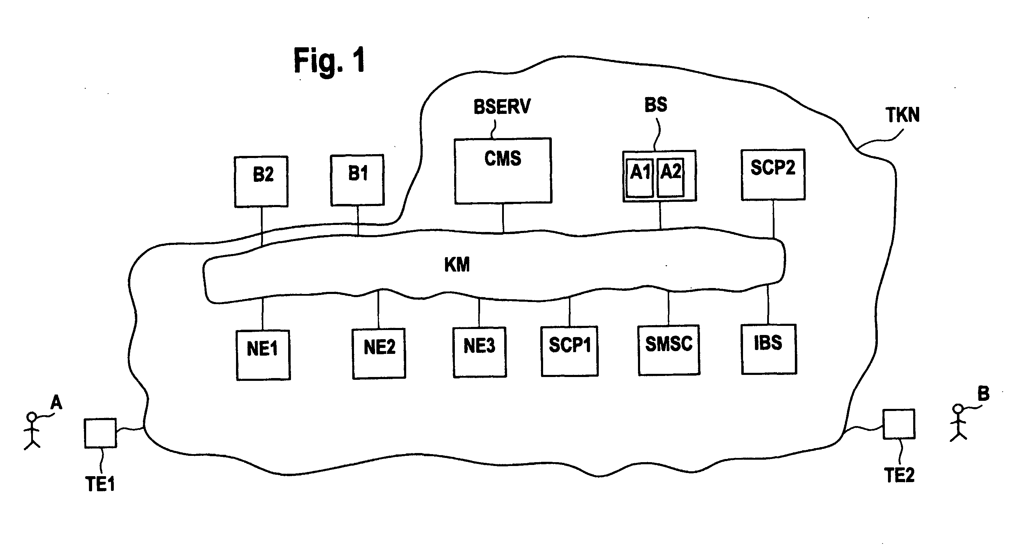

Fig. 1 zeigt ein Kommunikationsnetz TKN, das mit zwei Endgeräten TE1 und TE2 verbunden ist. Die Endgeräte TE1 und TE2 sind jeweils einem Teilnehmer A bzw. einem Teilnehmer B zugeordnet. Das Kommunikationsnetz TKN weist ein Kommunikationsmedium KM, mehrere Netzelemente NE1 bis NE3, mehrere Dienst-Server SCP1, SMSC und IBS, zwei Vergebührungs-Server BS und SCP2, und einen Server BSERV auf. Weiter sind in Fig. 1 zwei Vergebührungs-Server B1 und B2 gezeigt, die nicht Teil des Kommunikationsnetzes TKN sind. Über das Kommunikationsmedium KM sind die Netzelement NE1 bis NE3, die Dienst-Server SCP1, SMSC, IBS und die Vergebührungs-Server B1, B2, BS und SCP2 mit dem Server BSERV verbunden.

Bei dem Kommunikationsnetz TKN handelt es sich um ein Telekommunikationsnetz, beispielsweise um ein ISDN-Netz (ISDN = Integrated Service Digital Network). Diese Telekommunikationsnetz kann hierbei auch aus mehreren Teilnetzen bestehen, bei denen es sich um verschiedene Festnetze oder Mobilfunknetze, beispielsweise nach dem GSM-Standard oder dem UMTS-Standard (GSM = Global System for Mobile Communication, UMTS = Universal Mobile Telecommunicntions-System) handelt. Es ist auch möglich, dass verschiedene Teilnetze verschiedenen Netzbetreibern zugeordnet sind. Weiter ist es auch möglich, dass es sich bei dem Kommunikationsnetz TKN um ein Datennetz handelt, mittels dem Daten, Sprach- und /oder Bild-Informationen zwischen Endgeräten ausgetauscht werden können. Es kann sich somit bei dem Kommunikationsnetz TKN auch um ein Datennetz handeln, das als Dienst die Übertragung von Daten mittels des TCP-IP Protokoll-Stacks zur Verfügung stellt (TCP = Transmission Control Protocol, IP = Internet Protocol ).

Innerhalb des Kommunikationsnetzes TKN werden den Teilnehmern, von denen in Fig. 1 beispielhaft die Teilnehmer A und B gezeigt sind, verschiedenartige Dienste bereitgestellt. Ein solcher Dienst ist beispielsweise ein Kommunikationsdienst, der als Dienst eine Kommunikationsverbindung zwischen zwei oder mehr Endgeräten des Kommunikationsnetzes TKN bereitstellt. Weitere Dienste bestehen beispielsweise in der Übermittlung von bestimmten Informationen, aus dem Filtern von Informationen aus einem großen Datenbestand, aus dem Verkauf von Waren oder Dienstleistungen, oder aus dem Speichern oder der Verarbeitung von an einen Dienst übermittelten Informationen.

Die Endgeräte TE1 und TE2 sind Fernsprech-Endgeräte, beispielsweise ein ISDN Endgerät und ein Mobilfunk-Endgerät nach dem GSM-Standard. Es ist natürlich auch möglich, dass es sich bei den Endgeräten TE1 und TE2 um andersartige Endgeräte handelt, die mit dem Kommunikationsnetz TKN verbindbar sind. Bei den Endgeräten TE1 und TE2 kann es sich so beispielweise auch um Computer mit einer Modem- oder LAN-Karte (LAN = Local Area Network) handelt.

Bei den Netzelementen NE1 bis NE3 handelt es sich um Teilnehmervermittlungsstellen des Kommunikationsnetzes TKN. Es kann sich bei den Netzelementen NE1 bis NE3 jedoch auch um andersartige Netzelemente des Kommunikationsnetzes TKN handeln, deren Funktionsumfang die Generierung von Vergebührungsdaten umfasst. Solche Netzelemente können beispielsweise auch Router, Bridges, Gateways (Residential Gateway, Access Gateway) oder Manager von Datennetzen sein.

Bei dem Dienst-Server SCP1 handelt es sich um einen IN-Dienst-Server. (IN = Intelligent Network). Dieser Dienst-Server stellt IN-Dienste innerhalb des Kommunikationsnetzes TKN zur Verfügung. Bei dem Dienst-Server SMSC handelt es sich um einen Dienst-Server des Kommunikationsnetzes TKN, der Teilnehmern des Kommunikationsnetzes TKN den sogenannten "Short Message Service" zur Verfügung stellt. Dieser Dienst übermittelt Kurznachrichten zwischen Teilnehmern des Kommunikationsnetzes TKN. Bei dem Dienst-Server IBS handelt es sich um einen Server des Kommunikationsnetzes TKN, der die Vergebührung von Internet-Diensten bearbeitet, die von Teilnehmern des Kommunikationsnetzes TKN in Anspruch genommen werden.

Es ist natürlich auch möglich, dass weitere oder andersartige Dienst-Server des Kommunikationsnetzes TKN Vergebührungsdaten generieren und über das Kommunikationsmedium KM mit dem Server BSERV verbunden sind.

Vergebührungs-Server sind Server, die für die Erbringung ihrer Funktion Vergebührungsdaten des Kommunikationsnetzes TKN als Eingangsdaten benötigen.

Bei dem Vergebührungs-Server BS handelt es sich um den Gebührenabrechnungsrechner des Kommunikationsnetzes TKN. Dieser wird häufig auch als "Billing Center" oder "Customer Care and Billing Center" bezeichnet. Der Vergebührungs-Server BS weist mehrere Vergebührungs-Applikationen auf, von den in Fig. 1 beispielhaft die Applikationen A1 und A2 gezeigt sind. Die Applikationen A1 und A2 erbringen jeweils eine spezielle Vergebührungs-Funktion und benötigen für die Durchführung dieser jeweiligen Funktion den Zugriff auf Vergebührungsdaten.

Bei dem Vergebührungs-Server SCP2 handelt es sich um einen IN-Dienst-Server. Dieser IN-Dienst-Server erbringt für Teilnehmer des Kommunikationsnetzes TKN einen Dienst, für dessen Erbringungen er den Zugriff auf Vergebührungsdaten benötigt. Ein solcher Dienst kann beispielweise in der Anzeige von Vergebührungs-Informationen oder in der Verwaltung eines Prepaid-Kontos bestehen. Da der IN-Dienst-Server somit für die Erbringung seiner Funktion Vergebührungsdaten als Eingangsdaten benötigt, stellt er einen Vergebührungs-Server dar.

Bei den Vergebührungs-Servern B1 und B2 handelt es sich um Server von Banken oder Kreditinstituten. Für die Erbringung ihrer Funktion benötigen diese Server dem Zugriff auf Vergebührungs-Daten des Kommunikationsnetzes TKN und stellen in diesem Sinne Vergebührungs-Server dar.

Es ist auch möglich, dass weitere oder andersartige Server, die als Eingangsdaten Vergebührungs-Daten des Kommunikationsnetzes TKN benötigen und somit Vergebührungs-Server darstellen, über das Kommunikationsmedium KM mit dem Server BSERV verbunden sind.

Der Server BSERV besteht aus einem Rechner oder aus mehreren über ein Kommunikationsmedium verbundenen Rechner sowie aus einer Software-Plattform und Applikationsprogrammen, die auf diesem Rechner aufsetzen. Bei der Ausführung dieser Applikationsprogramme auf der aus Hardwareund Software-Plattform bestehenden Systemplattform des Servers BSERV wird ein im folgenden detailliert beschriebener Speicher-Dienst CMS bereit gestellt.

Es ist auch möglich, dass der Server BSERV ein virtueller Server ist, dessen Hardware- und Software-Komponenten über mehrere Server verteilt sind, die im wesentlichen andere Funktionen erbringen. Es ist auch möglich, dass die Applikationsprogramme des Servers BSERV auf der Systemplattform eines der Netzelemente NE1 bis NE3, eines der Dienst-Server SCP1, SMSC, IBS oder eines der Vergebührungs-Server BS oder SCP2 aufsetzen und diese Server dann jeweils die Funktion des Servers BSERV erbringen.

Der von dem Server BSERV bereitgestellte Speicher-Dienst CMS ist ein zentraler Speicherdienst, der Vergebührungsdatensätze einer Vielzahl von Teilnehmern des Kommunikationsnetzes TKN verwaltet. Diese Vergebührungsdatensätze sind jeweils geeignet, die Vergebührungsdaten betreffend die Inanspruchnahme von zwei oder mehr verschiedenartigen Diensten des Kommunikationsnetzes TKN zu umfassen. Wird der Speicher-Dienst CMS von einem der Netzelement NE1 bis NE3 oder einem der Dienstserver SCP1, SMSC oder IBS zur Speicherung von diesem Netzelement oder Dienstserver generierten Vergebührungsdaten kontaktiert, die die Vergebührung eines Dienstes betreffen, der von einem Teilnehmer des Kommunikationsnetzes TKN in Anspruch genommen worden ist, so speichert er die Vergebührungsdaten in demjenigen Vergebührungsdatensatz ab, der diesem Teilnehmer zugeordnet ist. Wird der zentrale Speicher-Dienst CMS von einem der Vergebührungs-Server B1, B2, BS oder SCP2 zum Zugriff auf Vergebührungsdaten eines Teilnehmers kontaktiert, so ermöglicht der Speicher-Dienst CMS das Auslesen von Daten aus dem Vergebührungsdatensatz dieses Teilnehmers.

Das Kommunikationsmedium KM ermöglicht die Kontaktierung des Speicher-Dienstes CMS durch die Netzelemente NE1 bis NE3, die Dienstserver SCP1, SMSC, IBS und die Vergebührungs-Server B1, B2, BS und SCP2. Bei dem Kommunikationsmedium KM handelt es sich vorzugsweise um ein Datennetz, über das die oben genannten Komponenten kommunizieren. Es ist jedoch auch möglich, dass zwei oder mehr dieser Komponenten auf derselben Systemplattform aufsetzen und das Kommunikationsmedium KM so Kommunikationsfunktionen dieser gemeinsamen Systemplattform mit umfasst. Das Kommunikationsmedium KM umfasst vorteilhafterweise auch ein Framework, das den Zugriff auf den Speicher-Dienst CMS in einfacher Weise ermöglicht. Beispielsweise könnte der Speicher-Dienst CMS über einen sogenannten Software-Bus bereitgestellt werden. Die Komponenten können so beispielsweise über eine CORBA-Plattform miteinander verbunden werden (CORBA = Common Object Request Broker Architecture). Weiter kann auch die SAN-Technologie für den Zugriff auf den Speicher-Dienst CMS verwendet werden (SAN = Storage Area Networks). Der Speicher-Dienstes CMS ist mit den Netzelementen NE1 bis NE3, den Dienstservern SCP1, SMSC, IBS und den Vergebührungs-Servern B1, B2, BS und SCP2 vorteilhafterweise über einen sogenannten "Fiber-Channel" verbunden.

Der Teilnehmer A nimmt mittels seines Endgerätes T1 einen Dienst des Kommunikationsnetzes TKN in Anspruch. Dieser Dienst besteht in diesem Ausführungsbeispiel in dem Aufbau einer Fernsprechverbindung zu dem Endgerät TE2 des Teilnehmers B. Das Netzelement NE1 stellt die Teilnehmervermittlungsstelle des Teilnehmers A dar. Sobald die Fernsprechverbindung zu dem Teilnehmer B beendet ist, generiert das Netzelement NE1 aus den ihm vorliegenden Verbindungsdaten Vergebührungsdaten, die die Vergebührung des von dem Teilnehmer A in Anspruch genommenen Dienstes betreffen, also die Bereitstellung der Fernsprechverbindung zwischen dem Teilnehmer A und dem Teilnehmer B betreffen. Diese Vergebührungsdaten beinhalten beispielsweise die Nummer des Ziel- und des Endteilnehmers der Verbindung sowie die Dauer der Verbindung. Zur Abspeicherung der Vergebührungsdaten kontaktiert das Netzelement NE1 über das Kommunikationsmedium KM einen für mehrere Netzelemente und/oder Dienstserver des Kommunikationsnetzes TKN zentralen Speicherdienst. Ein solcher zentraler Speicher-Dienst hat hierbei die Eigenschaft, Vergebührungsdaten von mehreren Netzelementen und/oder Dienstservern zentral zu speichern. Bei dem Speicher-Dienst CMS handelt es sich um einen solchen zentralen Speicher-Dienst und so kontaktiert das Netzelement NE1 den Speicher-Dienst CMS.

Hierbei ist es vorteilhaft, dass das Netzelement NE1 den zentralen Speicherdienst CMS unmittelbar nach Generierung der Vergebührungsdaten zur Speicherung der Vergebührungsdaten kontaktiert. Unmittelbar bedeutet in diesem Zusammenhang, dass die Kontaktierung des Speicherdienstes CMS durch die Generierung der Vergebührungsdaten initiiert wird und kurzzeitig nach dieser Generierung erfolgt.

Weiter ist es vorteilhaft, dass das Netzelement NE1 einen Speicher-Dienst kontaktiert, der einen Vergebührungsdatensatz verwaltet, indem zentral die Vergebührungsdaten aller von dem Teilnehmer A genutzten Dienste des Kommunikationsnetzes TKN gespeichert sind. Das Netzelement NE1 wählt so denjenigen zentralen Speicher-Dienst aus, der zentral die Vergebührungsdaten desjenigen Teilnehmers verwaltet, der den Dienst in Anspruch genommen hat, für den er die Vergebührungsdaten generiert hat.

Der zentrale Speicher-Dienst CMS speichert die Vergebührungsdaten, deretwegen er von dem Netzelement NE1 kontaktiert worden ist, in einem von ihm verwalteten Vergebührungsdatensatz ab. Bei diesem Vergebührungsdatensatz handelt es sich um einen dem Teilnehmer A des Kommunikationsnetzes zugeordneten Vergebührungsdatensatz, der geeignet ist, Vergebührungsdaten betreffend die Inanspruchnahme von zwei oder mehreren verschiedenartigen Diensten zu umfassen.

Zur Erstellung der Gebührenabrechnung für den Teilnehmer A benötigt der Vergebührungs-Server BS Vergebührungsdaten des Teilnehmers A. Zum Zugriff auf diese Vergebührungsdaten des Teilnehmers A kontaktiert der Vergebührungs-Server BS den zentralen Speicher-Dienst CMS.

Hierbei ist es vorteilhaft, dass der Vergebührungs-Server BS denjenigen zentralen Speicher-Dienst kontaktiert, der einen Vergebührungsdatensatz verwaltet, in dem zentral die Vergebührungsdaten aller von dem Teilnehmer A genutzten Dienste des Kommunikationsnetzes gespeichert sind. Zusätzlich hierzu kann dieser Vergebührungsdatensatz auch zentral alle den Teilnehmer betreffende Vergebührungsdaten enthalten, für die der Netzbetreiber des Kommunikationsnetzes TKN das Inkasso übernommen hat. "Teilnehmer" kann hierbei nicht nur eine natürliche Person, sondern auch eine Institution oder Firma sein.

Wird der zentrale Speicher-Dienst CMS von einem Vergebührungs-Server zum Zugriff auf Vergebührungsdaten eines Teilnehmers des Kommunikationsnetzes TKN kontaktiert, so ermöglicht er dem Vergebührungs-Server das Auslesen von Daten aus dem von ihm verwalteten Vergebührungsdatensatz dieses Teilnehmers. Der Speicher-Dienst CMS ermöglicht so dem Vergebührungs-Server BS das Auslesen von Daten aus dem von ihm verwalteten Vergebührungssatz des Teilnehmers A.

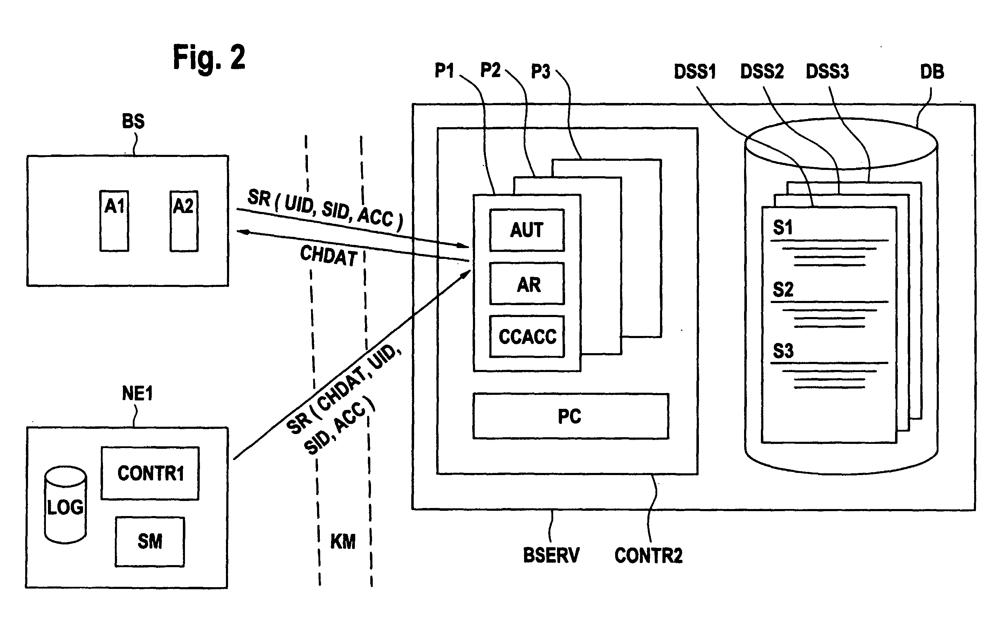

Im folgenden wird der detaillierte Aufbau und die detaillierte Funktionsweise des Servers BSERV anhand von Fig. 2 erläutert.

Fig. 2 zeigt den Server BSERV, den Vergebührungs-Server BS und das Netzelement NE1. Das Netzelement NE1 weist eine Steuereinheit CONTR1, ein Koppelnetz SM und eine Speichereinheit LOG auf. Die Steuereinheit CONTR1 steuert die Funktionen des Netzelements NE1 und wird von einem Rechner und von der auf diesem Rechner ablaufenden Software gebildet. Bei der Speichereinheit LOG handelt es sich um eine Datenbank. Auf die Speichereinheit LOG könnte auch verzichtet werden.

Der Vergebührungs-Server BS besteht aus einem Rechner und der auf diesem Rechner aufsetzenden Software. Der Vergebührungs-Server weist die Applikationen A1 und A2 auf. Wie bereits oben dargestellt, benötigen die Applikationen A1 und A2 zur Erbringung ihrer jeweiligen Funktion Vergebührungsdaten des Kommunikationsnetzes TKN.

Der Server BSERV dient der Unterstützung der Vergebührung von Diensten des Kommunikationsnetzes TKN. Er verfügt über Schnittstellen zur Verbindung mit Netzelementen und/oder Dienstservern des Kommunikationsnetzes TKN. Der Server BSERV verfügt somit über eine Schnittstelle zu dem Kommunikationsmedium KM, über die der Server BSERV mit den Netzelementen NE1 bis NE3, den Dienstservern SCP1, SMSC, IBS und den Vergebührungs-Servern B1, B2, BS und SCP2 verbunden ist. Der Server BSERV weist eine Steuereinheit CONTR2 und eine Speichereinheit DB auf.

Es ist auch möglich, dass die Speichereinheit DB nicht Teil des Servers BSERV ist. Die Speichereinheit DB kann auch Teil eines anderen Servers oder mehrerer anderer Server sein, die mit dem Server BSERV über ein Kommunikationsnetz verbunden sind.

Die Speichereinheit DB wird beispielsweise von einer Datenbank gebildet. Sie weist eine Vielzahl von Vergebührungsdatensätzen auf, von den in Fig. 2 beispielhaft die Vergebührungsdatensätze DSS1, DSS2 und DSS3 gezeigt sind. Jeder der Vergebührungsdatensätze DSS1 bis DSS3 ist einem der Teilnehmer des Kommunikationsnetzes TKN zugeordnet. Der Vergebührungsdatensatz DSS1 ist so beispielsweise dem Teilnehmer A zugeordnet. Die Vergebührungsdatensätze DSS1 bis DSS3 sind jeweils so modelliert, dass sie die Vergebührungsdaten betreffend die Inanspruchnahme von zwei oder mehr verschiedenartigen Diensten des Kommunikationsnetzes umfassen können. So enthält beispielsweise der Vergebührungsdatensatz DSS1 Vergebührungsdaten für drei verschiedenartige Dienste S1, S2 und S3 des Kommunikationsnetzes TKN. Innerhalb des Vergebührungsdatensatzes DSS1 sind die Vergebührungsdaten, die die Inanspruchnahme des Dienstes S1 durch den Teilnehmer A betreffen, einem ersten Unter-Datensatz zugeordnet, die die Inanspruchnahme des Dienstes S2 durch den Teilnehmer A betreffen einem zweiten Unter-Datensatz zugeordnet und die die Inanspruchnahme des Dienstes S3 durch den Teilnehmer A betreffen einem dritten Unter-Datensatz S3 zugeordnet. Es ist natürlich auch möglich, dass die Daten innerhalb des Vergebührungsdatensatzes DSS1 anders strukturiert sind. Jedes Element des Vergebührungsdatensatzes DSS1 könnte beispielsweise als Parameter die Art des in Anspruch genommenen Dienstes (beispielsweise S1 bis S3), den Zeitpunkt der Inanspruchnahme des Dienstes, die Zeitdauer der Inanspruchnahme des Dienstes, Kennung des Teilnehmers, der den Dienst in Anspruch genommen hat, und weitere Daten, beispielsweise anwendbares Tarifschema, Autorisierungscode, rufender und gerufener Teilnehmer (bei Kommunikationsdienst), Prioritätsklassen oder Gebührenbetrag umfassen. Es ist hierbei auch möglich, dass die Parameter abhängig von der Art des Dienstes zur Verfügung stehen.

Es ist auch möglich, dass die Vergebührungsdatensätze DSS1 bis DSS3 nicht jeweils einen zusammenhängenden Datensatz bilden, sondern jeweils von einer verketteten Liste von Datenelementen gebildet werden oder sich aus Datenelementen mit derselben Teilnehmerkennung ergeben.

Die Steuereinheit CONTR2 wird von einem Rechner oder von mehreren über ein Kommunikationsmedium verbundenen Rechnern sowie von einer auf diesem Rechner aufsetzenden Software-Plattform und auf dieser Software-Plattform aufsetzenden Applikationsprogramme gebildet. Die Applikationsprogramme, im folgenden als Computerprogramm bezeichnet, sind hierbei so gebildet, dass sie bei ihrer Ausführung auf der oben geschilderten Software- und Hardware-Plattform der Steuereinheit CONTR2 die im folgenden geschilderten Funktionen der Steuereinheit CONTR2 bedingen:

Die Steuereinheit CONTR2 stellt einen für mehrere Netzelemente und/oder Dienst-Server zentralen Speicher-Dienst, nämlich den Speicher-Dienst CMS bereit. Dieser Speicher-Dienst verwaltet die Vergebührungsdatensätze einer Vielzahl von Teilnehmern des Kommunikationsnetzes TKN, wobei diese Vergebührungsdatensätze jeweils geeignet sind, die Vergebührungsdaten betreffend die Inanspruchnahme von zwei oder mehr verschiedenartigen Diensten des Kommunikationsnetzes zu umfassen. Der von der Steuereinheit CONTR2 bereitgestellte zentrale Speicher-Dienst verwaltet somit beispielsweise die in der Speichereinheit DB gespeicherten Daten. Im Rahmen der Verwaltung dieser Vergebührungsdatensätze steuert er das Speichern und Lesen von Daten in bzw. aus der Speichereinheit DB. Wird der von der Steuereinheit CONTR2 bereitgestellte Speicher-Dienst von einem Netzelement oder einem Dienstserver des Kommunikationsnetzes TKN zur Speicherung von diesem Netzelement oder Dienstserver generierten Vergebührungsdaten kontaktiert, die die Vergebührung eines von einem Teilnehmer des Kommunikationsnetzes in Anspruch genommenen Dienstes betreffen, so speichert die Steuereinheit CONTR2 diese Vergebührungsdaten in demjenigen der Vergebührungsdatensätze ab, der diesem Teilnehmer zugeordnet ist. Wird der von der Steuereinheit CONTR2 bereitgestellte zentrale Speicher-Dienst weiter von einem Vergebührungs-Server zum Zugriff auf Vergebührungsdaten eines Teilnehmers des Kommunikationsnetzes TKN kontaktiert, so ermöglicht die Steuereinheit CONTR2 diesem Vergebührungs-Server das Auslesen von Daten aus dem Vergebührungsdatensatz dieses Teilnehmers.

Im folgenden wird eine mögliche programmtechnische Realisierung der Erbringung der oben geschilderten Funktionen und somit der Gestaltung des oben erwähnten Computerprogramms beschrieben:

Die Steuereinheit CONTR2 weist aus funktioneller Sicht vier durch Software implementierte Funktionen AUT, AR, CCACC und PC auf. Die Funktion PC verwaltet Prozesse, von denen in Fig. 2 beispielhaft drei Prozesse P1, P2 und P3 gezeigt sind. Die von der Funktion PC verwalteten Prozesse können hierbei auch parallel ablaufen. Im Rahmen der Prozesse P1, P2 und P3 werden jeweils die Funktionen AUT, AR und CCACC ausgeführt.

Die Funktion PC erkennt, wenn der von der Steuereinheit CONTR2 bereitgestellte zentrale Speicher-Dienst von einem Netzelement, von einem Dienst-Server oder von einem Vergebührungs-Server kontaktiert wird. Die Kontaktierung des zentralen Speicher-Dienstes erfolgt hierbei beispielsweise durch Senden einer Dienstanforderung an diesen Speicher-Dienst. Die Adressierung des Speicher-Dienstes kann hierbei durch eine Objekt-Adresse, eine File-Adresse oder durch die Benennung einer speziellen, dem zentralen Speicher-Dienst zugeordneten Funktions-Kennung erfolgen. Die Steuereinheit CONTR1 richtet somit beispielsweise zur Kontaktierung des zentralen Speicher-Dienstes eine Dienstanforderung SR mit Parametern CHDAT, UID, SID und ACC an den zentralen Speicher-Dienst. Die Applikation A2 richtet zur Kontaktierung des zentralen Speicher-Dienstes eine Dienstanforderung mit Parametern UID, SID und ACC an den zentralen Speicher-Dienst.

Erkennt die Funktion PC, dass der zentrale Speicher-Dienst kontaktiert wird, beispielsweise indem sie den Empfang einer an den zentralen Speicher-Dienst gerichteten Dienstanforderung erkennt, so erzeugt sie einen Prozess, beispielsweise den Prozess P1. Dieser Prozess bearbeitet dann die Dienstanforderung. Ist die Bearbeitung der Dienstanforderung beendet, so wird der zugeordnete Prozess, beispielsweise der Prozess P1, von der Funktion PC beendet.

Die Funktion AUT ermittelt die Identität des den zentralen Speicher-Dienst kontaktierenden Netzelements, Dienstservers oder Vergebührungs-Servers. Die ermittelte Identität übergibt sie sodann der Funktion AR. Die Ermittlung der Identität des kontaktierenden Netzelementes, Dienst-Servers oder Vergebührungs-Servers kann mittels der in der Dienstanforderung enthaltenen Parametern erfolgen. Die Identität ist beispielsweise aus einem Parameter ermittelbar, der die Kennung des die Dienstanforderung absendenden Objekts oder Prozesses angibt. Weiter kann eine spezielle Kennung zwischen Netzelementen, Dienstservern und Vergebührungs-Servern einerseits und dem Server BSERV andererseits vereinbart werden. Diese Kennung kann dann bei der Kontaktierung des zentralen Speicher-Dienstes von dem kontaktierenden Netzelement, Dienst-Server oder Vergebührungs-Server übergeben werden. Hier ist es vorteilhaft, dass die Funktion AUT bei der Ermittlung der Identität auf eine spezielle Umwertungs-Datenbank zugreift.

Weiter ist es vorteilhaft, dass die Funktion AUT zusätzlich die Identität des den zentralen Speicher-Dienst kontaktierenden Netzelements, Dienst-Servers oder Vergebührungs-Servers mittels einer Authentisierungsprozedur überprüft. Eine solche Authentisierungsprozedur kann in dem Überprüfen eines bei der Kontaktierung mit übergebenen Authentisierungscodes oder mittels einer digitalen Unterschrift oder eines asymmetrischen Codes realisiert werden. Ergibt die Überprüfung der Identität, dass die Identität des kontaktierenden Netzelements, Dienst-Servers oder Vergebührungs-Servers nicht gesichert ist, so wird der Prozess P1 beendet. Ein Zugriff auf die von dem zentralen Speicher-Dienst verwalteten Daten wird in diesem Fall nicht gewährt. Auf die Durchführung einer solchen Authentisierungsprozedur kann natürlich auch verzichtet werden.

Die Funktion AR bestimmt, in welchem Umfang bei Kontaktierung des zentralen Speicher-Dienstes Zugriff auf die von dem zentralen Speicher-Dienst verwalteten Vergebührungsdatensätze gewährt wird. Die Funktion AR ermittelt hierfür zuerst, ob der zentrale Speicher-Dienst von einem Netzelement oder einem Dienst-Server des Kommunikationsnetzes TKN kontaktiert wird. Hierzu überprüft sie die von der Funktion AUT ermittelte Identität des kontaktierenden Servers daraufhin, ob dieser Server ein Netzelement oder ein Dienstserver des Kommunikationsnetzes TKN ist. Ist dies der Fall, so gestattet die Funktion AR das Abspeichern der Vergebührungsdaten in von dem zentralen Speicher-Dienst verwalteten Vergebührungsdatensätze.

Die Funktion AR ermittelt weiter, ob es sich bei den den zentralen Speicher-Dienst kontaktierenden Server um einen Vergebührungs-Server handelt. Hierfür überprüft die Funktion AR die von der Funktion AUT ermittelte Identität des kontaktierenden Servers daraufhin, ob es sich bei dem kontaktierenden Server um einen Vergebührungs-Server handelt. Vorteilhafterweise hat die Funktion AR hierbei Zugriff auf eine Liste von Servern, die von der Funktion AR als Vergebührungs-Server akzeptiert werden. Jeder Vergebührungs-Server, der von der Funktion AR als Vergebührungs-Server akzeptiert werden soll, ist in diese Liste einzutragen. Ermittelt die Funktion AR, dass es sich bei dem den zentralen Speicher-Dienst kontaktierenden Server um einen (akzeptierten) Vergebührungs-Server handelt, so gestattet sie das Auslesen von Daten aus den von dem zentralen Speicher-Dienst verwalteten Vergebührungsdatensätzen.

Es ist auch möglich, dass die Funktion AR überprüft, ob das den zentralen Speicher-Dienst kontaktierende Netzelement oder der den zentralen Speicher-Dienst kontaktierende Dienst-Server in einem Zugriffsprofil als berechtigt gekennzeichnet ist. Nur in diesem Fall gestattet die Funktion AR das Abspeichern von Vergebührungsdaten in einem von ihr verwalteten Vergebührungsdatensatz. Beispielsweise ist für jeden der Netzelemente des Kommunikationsnetzes TKN und für jeden der Dienst-Server des Kommunikationsnetzes TKN ein Zugriffsprofil abgespeichert, auf das die Funktion AR Zugriff hat. Es ist auch möglich, dass jeweils für eine Gruppe von Netzelementen des Kommunikationsnetzes TKN oder eine Gruppe von Dienst-Servern des Kommunikationsnetzes TKN ein solches Zugriffsprofil abgespeichert ist. Dieses Zugriffsprofil beschreibt die jeweiligen Zugriffsrechte des zugeordneten Netzelements oder des zugeordneten Dienstservers auf von dem zentralen Speicher-Dienst verwalteten Vergebührungsdatensätze. Diese Zugriffsrechte können von einer Vielzahl von Parametern abhängen. Parameter können beispielsweise Art des Dienstes, Teilnehmer oder Zeitpunkt sein. Auch Vergebührungs-Server können solche Zugriffsprofile zugeordnet werden. Diese Zugriffsprofile werden dann in gleicher Weise von der Funktion AR überprüft, bevor sie ein Auslesen von Daten aus von ihr verwalteten Vergebührungsdatensätzen gestattet. Hierbei ist es auch möglich, dass Vergebührungs-Servern mittels des Zugriffsprofils das Schreiben von Vergebührungsdaten in von dem zentralen Speicher-Dienst verwalteten Vergebührungsdatensätze oder das Löschen von Vergebührungsdaten aus von dem zentralen Speicher-Dienst verwalteten Vergebührungsdatensätzen gestattet wird. Auf diese Weise ist es möglich, detailliert zu definieren, welcher Vergebührungs-Server welche Vergebührungsdaten lesen darf oder nicht lesen darf.

Die Funktion CCACC liest Daten von von dem zentralen Speicher-Dienst verwalteten Vergebührungsdatensätzen aus und speichert Vergebührungsdaten in Vergebührungsdatensätzen ab, die von dem zentralen Speicher-Dienst verwaltet werden. Wird der zentrale Speicher-Dienst von einem Netzelement oder Dienst-Server zur Speicherung von diesem Netzelement oder Dienst-Server generierten Vergebührungsdaten kontaktiert und gestattet die Funktion AR das Abspeichern dieser Vergebührungsdaten, so speichert die Funktion CCACC diese Vergebührungsdaten in demjenigen der von dem zentralen Speicher-Dienst verwalteten Vergebührungsdatensätze ab, der dem Teilnehmer zugeordnet ist, den diese Vergebührungsdaten betreffen. Wird der zentrale Speicher-Dienst von einem Vergebührungs-Server zum Zugriff auf Vergebührungsdaten eines Teilnehmers des Kommunikationsnetzes TKN kontaktiert und gestattet die Funktion AR das Auslesen dieser Vergebührungsdaten aus einem von ihr verwalteten Vergebührungsdatensatz, so ermöglicht die Funktion dem Vergebührungs-Server das Auslesen dieser Daten aus dem Vergebührungsdatensatz dieses Teilnehmers. Dies wird beispielsweise dadurch realisiert, dass die Funktion CCACC Vergebührungsdaten, die von dem Vergebührungs-Server dem zentralen Speicher-Dienst gegenüber spezifiziert werden, aus der Speichereinheit DB ausliest und in einer Rückantwort an den Vergebührungs-Server übermittelt.

Die Funktion CCACC Server koordiniert vorteilhafterweise auch die Zugriffe auf die Vergebührungsdatensätze. Wie aus Fig. 2 ersichtlich, ist es durchaus möglich, dass zwei oder mehr der Prozesse P1 bis P3 auf einen Vergebührungsdatensatz parallel oder zeitnah zugreifen. Solche, unter Umständen konkurrierende Zugriffe werden von den Funktionen CCACC der Prozesse P1 bis P3 synchronisiert.

Ist die Funktion CCACC erbracht oder ermittelt die Funktion AR, dass sie einem kontaktierenden Server weder das Schreiben noch das Lesen von Daten gestattet, so wird der Prozess P1 beendet.

Die Steuereinheit CONTR1 generiert Vergebührungsdaten und kontaktiert zur Speicherung dieser generierten Vergebührungsdaten den von der Steuereinheit CONTR2 bereitgestellten zentralen Speicher-Dienst, in dem sie die Dienstanforderung SR mit den Parametern CHDAT, UID, SID und ACC über das Kommunikationsmedium KM an den zentralen Speicher-Dienst richtet. Der Parameter CHDAT enthält hierbei die zu speichernden Vergebührungsdaten. Der Parameter UID spezifiziert den Sender der Dienstanforderung, also die Steuereinheit CONTR1. Der Parameter SID spezifiziert den von der Steuereinheit CONTR2 bereitgestellten zentralen Speicher-Dienst. Der Parameter ACC spezifiziert die Zugriffsart. Die Funktion PC erzeugt beim Empfang der Dienstanforderung SR den Prozess P1. Die Funktion AUT ermittelt aus dem Parameter UID die Identität des kontaktierenden Servers, also das Netzelement NE1. Die Funktion AR ermittelt, dass es sich bei dem Netzelement NE1 um ein Netzelement des Kommunikationsnetzes TKN handelt und gestattet das Speichern der Vergebührungsdaten in die von dem zentralen Speicher-Dienst verwalteten Vergebührungsdatensätze. Die Funktion CCACC ermittelt aus den Parametern CHDAT und ACC, dass die Vergebührungsdaten CHDAT in eine der von dem zentralen Speicher-Dienst verwalteten Vergebührungsdatensätze zu speichern ist und ermittelt weiter, welchem Teilnehmer des Kommunikationsnetzes TKN diese Vergebührungsdaten zugeordnet sind. Entsprechend der so ermittelten Informationen bringt die Funktion CCACC die Vergebührungsdaten CHDAT in die Datenstruktur der Speichereinheit DB ein.

Parallel zum Kontaktieren des zentralen Speicher-Dienstes ist es auch möglich, dass die Steuereinheit CONTR1 die Vergebührungsdaten ebenfalls in der Speichereinheit LOG abspeichert. Ein solches Vorgehen ist aus Sicherheitsgesichtspunkten vorteilhaft. Bei einer Fehlfunktion des Servers BSERV ist es so möglich, die Vergebührungsdaten im nachhinein noch zu rekonstruieren.

In analoger Weise wie die Steuereinheit CONTR1 kontaktiert die Applikation A2 mittels der Dienstanforderung SR den zentralen Speicher-Dienst. Als Antwort auf die Dienstanforderung SR erhält sie von der Funktion CCACC die Vergebührungsdaten CHDAT.

Hier ist es vorteilhaft, dass die Steuereinheit CONTR2 Netzelementen, Dienst-Servern und Vergebührungs-Servern eine einheitliche Zugriffs-Schnittstelle auf den von ihr bereitgestellten Speicher-Dienst bereitstellt. Dies ist beispielsweise dadurch möglich, dass der Speicher-Dienst von Netzelementen, Dienst-Servern und Vergebührungs-Servern auf gleiche Art und Weise zu kontaktieren ist. Beispielsweise verfügen die zur Kontaktierung des Speicher-Dienstes verwendeten Dienstanforderungen über dieselbe Datenstruktur. Es ist jedoch auch möglich, dass die Steuereinheit CONTR2 unterschiedliche Zugriffsmöglichkeiten auf den von ihr bereitgestellten Speicher-Dienst zur Verfügung stellt. Zum einen können unterschiedliche Kommunikationsprotokolle für verschiedene Dienst-Server, Vergebührungs-Server und Netzelemente Verwendung finden. Weiter kann sich auch die Datenstruktur der Dienstanforderungen von verschiedenen Netzelementen, Dienst-Servern und Vergebührungs-Servern unterscheiden. Dies ist unter Umständen vorteilhaft, um bereits bestehende, verschiedenartige Systeme zu integrieren.

## Patentansprüche

1. Verfahren zur Unterstützung der Vergebührung von Diensten in einem Kommunikationsnetz (TKN), wobei bei dem Verfahren Vergebührungsdaten (CHDATA), die die Vergebührung eines von einem Teilnehmer (A) des Kommunikationsnetzes (TKN) in Anspruch genommenen Dienstes betreffen, von einem Netzelement (NE1 bis NE3) oder einem Dienst-Server (SCP1, SMSC, IBS) des Kommunikationsnetzes (TKN) generiert werden und die Vergebührungsdaten (CHDATA) in einem von einem zentrale Speicher-Dienst verwalteten Vergebührungsdatensatz (DSS1 bis DSS3) abspeichert werden, und der Vergebührungsdatensatz (DSS1 bis DSS3) dem Teilnehmer (A) des Kommunikationsnetzes zugeordnet ist und geeignet ist, Vergebührungsdaten betreffend die Inanspruchnahme von zwei oder mehr verschiedenartigen Diensten (S1 bis S3) zu umfassen und ein Vergebührungs-Server (B1, B2, BS, SCP2) zum Zugriff auf Vergebührungsdaten (CHDATA) des Teilnehmers (A) den zentralen Speicher-Dienst (CMS) kontaktiert, der dann dem Vergebührungs-Server (B1, B2, BS, SCP2) das Auslesen von Daten aus dem von ihm verwalteten Vergebührungsdatensatz (DSS1 bis DSS3) des Teilnehmers (A) ermöglicht, **dadurch gekennzeichnet, dass** das Netzelement (NE1 bis NE3) oder der Dienst-Server (SCP1, SMSC, IBS) zur Speicherung der generierten Vergebührungsdaten einen für mehrere Netzelemente und/ oder Dienst-Server zentralen Speicher-Dienst (CMS) kontaktiert.

2. Verfahren nach Anspruch 1, **dadurch gekennzeichnet, dass** das Netzelement (NE1 bis NE3) oder der Dienst-Server (SCP1, SMSC, IBS) den zentralen Speicher-Dienst (CMS) unmittelbar nach Generierung der Vergebührungsdaten zur Speicherung der Vergebührungsdaten kontaktiert.

3. Verfahren nach Anspruch 1, **dadurch gekennzeichnet, dass** der kontaktierte zentrale Speicher-Dienst (CMS) einen Vergebührungsdatensatz verwaltet, in dem zentral die Vergebührungsdaten aller von dem Teilnehmer genutzten Dienste des Kommunikationsnetzes gespeichert sind.

4. Server (BSERV) zur Unterstützung der Vergebührung von Diensten in einem Kommunikationsnetz (TKN) mit einer Steuereinheit (CONTR2) und mit Schnittstellen zur Verbindung mit Netzelementen (NE1 bis NE3) und/ oder Dienst-Servern (SCP1, SMSC, IBS) des Kommunikationsnetzes (TKN), dass die Steuereinheit (CONTR2) so ausgestaltet ist, dass sie, wenn der zentralen Speicher-Dienst (CMS) von einem Vergebührungs-Server (B1, B2, BS, SCP2) zum Zugriff auf Vergebührungsdaten (CHDATA) eines Teilnehmers (A) kontaktiert wird, dem Vergebührungs-Server (B1, B2, BS, SCP2) das Auslesen von Daten aus dem Vergebührungsdatensatz (DSS1 bis DSS3) dieses Teilnehmers (A) ermöglicht **dadurch gekennzeichnet, dass** die Steuereinheit (CONTR2) so ausgestaltet ist, dass sie einen für mehrere Netzelemente und/ oder Dienst-Server zentralen Speicher-Dienst (CMS) bereitstellt, der Vergebührungsdatensätze (DSS1 bis DSS3) einer Vielzahl von Teilnehmern (A, B) des Kommunikationsnetzes (TKN) verwaltet, die jeweils geeignet sind die Vergebührungsdaten betreffend die Inanspruchnahme von zwei oder mehr verschiedenartigen Diensten (S1 bis S3) des Kommunikationsnetzes zu umfassen, dass die Steuereinheit (CONTR2) weiter so ausgestaltet ist, dass sie, wenn der zentralen Speicher-Dienst (CMS) von einem Netzelement (NE1 bis NE3) oder einem Dienst-Server (SCP1, SMSC, IBS) des Kommunikationsnetzes (TKN) zur Speicherung von diesem Netzelement (NE1 bis NE3) oder Dienst-Server (SCP1, SMSC, IBS) generierten Vergebührungsdaten kontaktiert wird, die die Vergebührung eines von einem Teilnehmer (A) des Kommunikationsnetzes (TKN) in Anspruch genommenen Dienstes betreffen, die Vergebührungsdaten (CHDATA) in demjenigen der Vergebührungsdatensätze (DSS1 bis DSS3) abspeichert, der diesem Teilnehmer (A) zugeordnet ist.

5. Server (BSERV) nach Anspruch 4, **dadurch gekennzeichnet, dass** die Steuereinheit (CONTR2) weiter so ausgestaltet ist, dass sie, wenn der zentralen Speicher-Dienst (CMS) kontaktiert wird, die Identität des den zentralen Speicher-Dienst (CMS) kontaktierenden Netzelements, Dienst-Servers oder Vergebührungs-Servers ermittelt.

6. Server (BSERV) nach Anspruch 4, **dadurch gekennzeichnet, dass** die Steuereinheit (CONTR2) weiter so ausgestaltet ist, dass sie, wenn der zentralen Speicher-Dienst (CMS) kontaktiert wird, die Identität des den zentralen Speicher-Dienst (CMS) kontaktierenden Netzelements, Dienst-Servers oder Vergebührungs-Servers mittels einer Authentisierungsprozedur überprüft.

7. Server (BSERV) nach Anspruch 4, **dadurch gekennzeichnet, dass** die Steuereinheit (CONTR2) weiter so ausgestaltet ist, dass sie überprüft, ob das kontaktierenden Netzelement oder der kontaktierende Dienst-Server in einem Zugriffsprofil als berechtigt gekennzeichnet ist und nur in diesem Fall die Vergebührungsdaten (CHDATA) in einem von ihr verwalteten Vergebührungsdatensatz (DSS1 bis DSS3) abspeichert.

8. Server (BSERV) nach Anspruch 4, **dadurch gekennzeichnet, dass** die Steuereinheit (CONTR2) weiter so ausgestaltet ist, dass sie überprüft, ob der kontaktierende Vergebührungs-Server in einem Zugriffsprofil als berechtigt gekennzeichnet ist und nur in diesem Fall das Auslesen von Daten aus dem von ihm verwalteten Vergebührungsdatensatzes (DSS1 bis DSS3) ermöglicht.

9. Server (BSERV) nach Anspruch 4, **dadurch gekennzeichnet, dass** die Steuereinheit (CONTR2) weiter so ausgestaltet ist, dass sie die Zugriffe auf die Vergebührungsdatensätze koordiniert.

10. Server (BSERV) nach Anspruch 4, **dadurch gekennzeichnet, dass** die Steuereinheit (CONTR2) weiter so ausgestaltet ist, dass sie Netzelementen, Dienst-Servern und Vergebührungs-Servern eine einheitliche Zugriffs-Schnittstelle auf den Speicher-Dienst (CMS) bereitstellt.

11. Computerprogramm zur Unterstützung der Vergebührung von Diensten in einem Kommunikationsnetz (TKN),
**dadurch gekennzeichnet, dass** das Computerprogramm so ausgestaltet ist, dass die Schritte des Verfahrens nach Anspruch 1 ablaufen.

12. Speichermedium auf dem ein Computerprogramm nach Anspruch 11 abgespeichert ist.

## Claims

1. Method for supporting the charging of services in a communications network (TKN), the method being such that charging data (CHDATA) relating to the charging of a service used by a user (A) of the communications network (TKN) are generated by a network element (NE1 to NE3) or a service server (SCP1, SMSC, IBS) of the communications network (TKN), and the charging data (CHDATA) are stored in a charging data record (DSS1 to DSS3) managed by the central memory service, and the charging data record (DSS1 to DSS3) is assigned to the user (A) of the communications network and is suitable for containing charging data relating to the use of two or more different types of services (S1 to S3), and, for the purpose of accessing charging data (CHDATA) of the user (A), a charging server (B1, B2, BS, SCP2) contacts the central memory service (CMS), which then enables the charging server (B1, B2, BS, SCP2) to read out data from the charging data record (DSS1 to DSS3) of the user (A) managed by the central memory service, **characterized in that**, for the purpose of storing the generated charging data, the network element (NE1 to NE3) or the service server (SCP1, SMSC, IBS) contacts a central memory service (CMS) for several network elements and/or service servers.

2. Method according to Claim 1, **characterized in that**, for the purpose of storing the charging data, the network element (NE1 to NE3) or the service server (SCP1, SMSC, IBS) contacts the central memory service CMS) immediately following generation of the charging data.

3. Method according to Claim 1, **characterized in that** the contacted central memory service (CMS) manages a charging data record in which the charging data of all services of the communications network used by the user are centrally stored.

4. Server (BSERV) for supporting the charging of services in a communications network (TKN), with a control unit (CONTR2) and with interfaces for connecting to network elements (NE1 to NE3) and/or service servers (SCP1, SMSC, IBS) of the communications network (TKN), the control unit (CONTR2) being designed in such a way that, when the central memory service (CMS) is contacted by a charging server (B1, B2, BS, SCP2) for the purpose of accessing charging data (CHDATA) of a user (A), it enables the charging server (B1, B2, BS, SCP2) to read out data from the charging data record (DSS1 to DSS3) of this user (A), **characterized in that** the control unit (CONTR2) is designed in such a way that it provides for several network elements and/or service servers a central memory service (CMS) which manages charging data records (DSS1 to DSS3) of a multiplicity of users (A, B) of the communications network (TKN) which are respectively suitable for containing the charging data relating to the use of two or more different types of services (S1 to S3) of the communications network, and the control unit (CONTR2) is further designed in such a way that, when the central memory service (CMS) is contacted by a network element (NE1 to NE3) or a service server (SCP1, SMSC, IBS) of the communications network (TKN) for the storage of charging data generated by this network element (NE1 to NE3) or service server (SCP1, SMSC, IBS) and relating to the charging of a service used by a user (A) of the communications network (TKN), it stores the charging data (CHDATA) **in that** record of the charging data records (DSS1 to DSS3) which is assigned to that user (A).

5. Server (BSERV) according to Claim 4, **characterized in that** the control unit (CONTR2) is further designed in such a way that, when the central memory service (CMS) is contacted, it ascertains the identity of the network element, service server or charging server contacting the central memory service (CMS).

6. Server (BSERV) according to Claim 4, **characterized in that** the control unit (CONTR2) is further designed in such a way that, when the central memory service (CMS) is contacted, it verifies, by means of an authentication procedure, the identity of the network element, service server or charging server contacting the central memory service (CMS).

7. Server (BSERV) according to Claim 4, **characterized in that** the control unit (CONTR2) is further designed in such a way that it verifies whether the contacting network element or the contacting service server is identified as authorized in an access profile and, in this case only, stores the charging data (CHDATA) in a charging data record (DSS1 to DSS3) managed by it.

8. Server (BSERV) according to Claim 4, **characterized in that** the control unit (CONTR2) is further designed in such a way that it verifies whether the contacting charging server is identified as authorized in an access profile and, in this case only, enables data to be read out from the charging data record (DSS1 to DSS3) managed by it.

9. Server (BSERV) according to Claim 4, **characterized in that** the control unit (CONTR2) is further designed in such a way that it coordinates the accesses to the charging data records.

10. Server (BSERV) according to Claim 4, **characterized in that** the control unit (CONTR2) is further designed in such a way that it provides network elements, service servers and charging servers with a uniform access interface to the memory service (CMS).

11. Computer program for supporting the charging of services in a communications network (TKN), **characterized in that** the computer program is designed in such a way that the steps of the method according to Claim 1 are executed.

12. Storage medium on which a computer program according to Claim 11 is stored.

## Revendications

1. Procédé de prise en charge de la taxation de services dans un réseau de communication (TKN), dans lequel des données de taxation (CHDATA) concernant la taxation d'un service utilisé par un abonné (A) du réseau de communication (TKN) sont générées par un élément de réseau (NE1 à NE3) ou un serveur de services (SCP1, SMSC, IBS) du réseau de communication (TKN), et les données de taxation (CHDATA) sont mémorisées dans un enregistrement de taxation (DSS1 à DSS3) géré par un service central de mémorisation, et l'enregistrement de taxation (DSS1 à DSS3) est affecté à l'abonné (A) du réseau de communication et adapté pour comprendre des données de taxation concernant l'utilisation de deux ou plusieurs services (S1 à S3) différents, et pour accéder aux données de taxation (CHDATA) de l'abonné (A), un serveur de taxation (B1, B2, BS, SCP2) contacte le service central de mémorisation (CMS) qui autorise alors le serveur de taxation (B1, B2, BS, SCP2) à lire des données à partir de l'enregistrement de taxation (DSS1 à DSS3) de l'abonné (A), l'enregistrement étant géré par le service central de mémorisation, **caractérisé en ce que**, pour mémoriser les données de taxation générées, l'élément de réseau (NE1 à NE3) ou le serveur de services (SCP1, SMSC, IBS) contacte un service central de mémorisation (CMS) pour plusieurs éléments de réseau et/ou serveurs de services.

2. Procédé selon la revendication 1, **caractérisé en ce que** l'élément de réseau (NE1 à NE3) ou le serveur de services (SCP1, SMSC, IBS) contacte le service central de mémorisation (CMS) immédiatement après la génération des données de taxation pour mémoriser les données de taxation.

3. Procédé selon la revendication 1, **caractérisé en ce que** le service central de mémorisation (CMS) contacté gère un enregistrement de taxation dans lequel les données de taxation de tous les services utilisés par l'abonné du réseau de communication sont mémorisées de façon centrale.

4. Serveur (BSERV) de prise en charge de la taxation de services dans un réseau de communication (TKN) avec une unité de commande (CONTR2) et avec des interfaces pour une connexion aux éléments de réseau (NE1 à NE3) et/ou aux serveurs de services (SCP1, SMSC, IBS) du réseau de communication (TKN), l'unité de commande (CONTR2) étant réalisée de telle sorte que lorsque le service central de mémorisation (CMS) est contacté par un serveur de taxation (B1, B2, BS, SCP2) pour accéder aux données de taxation (CHDATA) d'un abonné (A), elle autorise le serveur de taxation (B1, B2, BS, SCP2) à lire des données à partir de l'enregistrement de taxation (DSS1 à DSS3) de cet abonné (A), **caractérisé en ce que** l'unité de commande (CONTR2) est configurée de telle sorte qu'elle fournit un service central de mémorisation (CMS) pour plusieurs éléments de réseau et/ou serveurs de services qui gère les enregistrements de taxation (DSS1 à DSS3) d'une pluralité d'abonnés (A, B) du réseau de communication (TKN) qui sont respectivement adaptés pour comprendre les données de taxation concernant l'utilisation de deux ou plusieurs services différents (S1 à S3) du réseau de communication, **en ce que** l'unité de commande (CONTR2) est en outre configurée de telle sorte que lorsque le service central de mémorisation (CMS) est contacté par un élément de réseau (NE1 à NE3) ou un serveur de services (SCP1, SMSC, IBS) du réseau de communication (TKN) pour mémoriser des données de taxation générées par cet élément de réseau (NE1 à NE3) ou ce serveur de services (SCP1, SMSC, IBS) qui concernent la taxation d'un service utilisé par un abonné (A) du réseau de communication (TKN), elle mémorise les données de taxation (CHDATA) dans celui des enregistrements de taxation (DSS1 à DSS3) qui est affecté à cet abonné (A).

5. Serveur (BSERV) selon la revendication 4, **caractérisé en ce que** l'unité de commande (CONTR2) est en outre configurée de telle sorte que lorsque le service central de mémorisation (CMS) est contacté, elle détermine l'identité de l'élément de réseau, du serveur de services ou du serveur de taxation contactant le service central de mémorisation (CMS).

6. Serveur (BSERV) selon la revendication 4, **caractérisé en ce que** l'unité de commande (CONTR2) est en outre configurée de telle sorte que quand le service central de mémorisation (CMS) est contacté, elle vérifie au moyen d'une procédure d'authentification l'identité de l'élément de réseau, du serveur de services ou du serveur de taxation contactant le service central de mémorisation (CMS).

7. Serveur (BSERV) selon la revendication 4, **caractérisé en ce que** l'unité de commande (CONTR2) est en outre configurée de telle sorte qu'elle vérifie si l'élément de réseau établissant le contact ou le serveur de services établissant le contact est identifié comme autorisé dans un profil d'accès et ne mémorise les données de taxation (CHDATA) dans un enregistrement de taxation (DSS1 à DSS3) géré par celle-ci que dans ce cas.

8. Serveur (BSERV) selon la revendication 4, **caractérisé en ce que** l'unité de commande (CONTR2) est en outre configurée de telle sorte qu'elle vérifie si le serveur de taxation établissant le contact est identifié comme autorisé dans un profil d'accès et permet uniquement dans ce cas la lecture de données à partir de l'enregistrement de taxation (DSS1 à DSS3) géré par celui-ci.

9. Serveur (BSERV) selon la revendication 4, **caractérisé en ce que** l'unité de commande (CONTR2) est en outre configurée de telle sorte qu'elle coordonne les accès aux enregistrements de taxation.

10. Serveur (BSERV) selon la revendication 4, **caractérisé en ce que** l'unité de commande (CONTR2) est en outre configurée de telle sorte qu'elle fournit aux éléments de réseau, aux serveurs de services et aux serveurs de taxation une interface d'accès homogène au service de mémorisation (CMS).

11. Programme informatique de prise en charge de la taxation de services dans un réseau de communication (TKN), **caractérisé en ce que** le programme informatique est configuré de telle sorte que les étapes du procédé selon la revendication 1 se succèdent.

12. Support de mémoire sur lequel est mémorisé un programme informatique selon la revendication 11.
